# EUROPEAN PATENT APPLICATION

(11) **EP 4 703 622 A1**
(43) Date of publication of application: **04.03.2026**
(21) Application number: 24796459.6
(22) Date of filing: 10.01.2024
(51) Int. Cl.: F17C 13/00, F17C 9/00

(54) **STORAGE TANK FOR LIQUID**

(30) Priority: 26.04.2023 JP 2023072590
(71) Applicant: Kabushiki Kaisha Toshiba, Tokyo 105-0023 (JP); Toshiba Energy Systems & Solutions Corporation, Saiwai-ku Kawasaki-shi Kanagawa 2120013 (JP)
(72) Inventor: INATOMI, Takanari, Kawasaki-shi, Kanagawa 212-0013 (JP); SHIMONOSONO, Tsutomu, Kawasaki-shi, Kanagawa 212-0013 (JP); NEZUKA, Hayato, Kawasaki-shi, Kanagawa 212-0013 (JP); NAKAMURA, Hideyuki, Kawasaki-shi, Kanagawa 212-0013 (JP); YANAGI, Yutaka, Kawasaki-shi, Kanagawa 212-0013 (JP); MIZUMAKI, Shoichi, Tokyo 105-0023 (JP)
(74) Representative: Hoffmann Eitle
(86) International application number: PCT/JP2024/000305
(87) International publication number: WO 2024/224699

(57) **Abstract**

There is provided a tank configured to reduce heat input to the tank by reducing the number of penetrating components with a superior space-saving property and a suitability for storage of liquid at an extremely low temperature. A storage tank (10) is equipped with a transport pipe (21) configured to be inserted into a first opening (11) formed at a reservoir (16) for a liquid (15), and a pump (30) that is disposed at the distal end of the transport pipe (21) inside of the reservoir (16) and applies flow pressure to the liquid (15) to flow toward an outside of the reservoir (16).

## Description

### Technical Field

The present invention embodiment relates to a tank suitable for storage of an extremely low temperature liquid such as liquefied gas.

### Background Art

Recently, the utilization of hydrogen as fuel for electricity generation, airplanes, and ships has been promoted to curb generation of greenhouse gases such as CO₂, which may accelerate global warming. For use in electricity generation, a hydrogen gas turbine equipped with a storage tank for high pressure hydrogen gas has been known. Here, carbon fiber reinforced plastics (CFRP) are wound around the storage tank for high pressure hydrogen gas to reinforce its strength of pressure resistance against compressed gases. Therefore, general storage tanks for compressed gases are disadvantageous in terms of economic efficiency due to difficulty in increasing the size thereof, resulting in a small storage capacity, and due to short operating time with one-time filling of gas.

For this reason, a study has been made to develop storage tanks for liquefied hydrogen, which is produced by liquefying hydrogen gas. Liquefied hydrogen, which is produced by liquefying and cooling hydrogen gas to an extremely low temperature of -253°C, would have a small volume about one-eight hundredth of hydrogen gas in standard conditions. Therefore, it is possible to increase the storage capacity of a storage tank for liquefied gas even when the storage tank has a small size. The storage tank for liquefied gas is a dual-structured vessel, which is improved in heat insulation of liquefied gas to be stored therein by keeping the interval space of dual structures in vacuum.

For example, the hydrogen fuel for use in electricity generation is pressurized to twenty atmospheric pressure and then supplied to a combustor of a gas turbine. Therefore, the liquid hydrogen is sucked and transferred from the storage tank using a pump for pressurizing gas under predetermined pressure. A reciprocating piston pump can be used as a small-size pump appropriately installable in the storage tank for liquefied gas.

### Citation List

### Patent Literature

Patent Document 1: Japanese Patent Application Publication No. 2007-225229

### Summary of Invention

### Technical Problem

The conventional piston pump is installed in a storage tank for liquefied gas such that a driving means of a piston is installed in a normal temperature portion of tank while a piston is installed in the interior of tank. Therefore, the piston pump having a structure of penetrating the dual-structured tank with a driving shaft cannot prevent an increase in heat effusion from the exterior of tank to the interior of tank regardless of the operation or the stoppage of the piston pump. To reduce heat effusion, it is possible to adopt a measure of using a non-metal material having low heat conductivity for the sleeve and/or the driving shaft, however, which might produce a limited effect.

Irrespective of the occurrence of boil off gas (BOG) for vaporizing liquefied gas due to heat input to a tank in facilities having a high rate of operation such as normally operating facilities, no problem may arise since liquefied gas can be directly used for fuel. When facilities having a low rate of operation are stopped for a week or more, for example, heat will be continuously input into a tank during the stoppage of facilities, thus increasing the amount of BOG.

In result, the BOG will be continuously generated until the interior pressure of tank reaches its pressure limit, whereby part of fuel may be discharged to the exterior of tank over a safety valve, which may cause fuel loss. Liquid hydrogen may vaporize easily due to a small latent heat of vaporization, which is about one-seventh of evaporative latent heat of LNG, and therefore even when materials of penetrating members of tank are replaced with a material having low heat conductivity, it is difficult to sufficiently suppress the BOG. This may lose advantage of using liquefied hydrogen contributing to an increase in the storage volume of tanks.

The present invention embodiment is made in consideration of the above circumstances and aims to provide a tank capable of reducing heat input to the tank by reducing the number of penetrating members and by reducing vaporization loss of liquefied gas with a high space-saving feature and suitability to storage of an extremely low temperature liquid.

### Brief Description of Drawings

Fig. 1 is a longitudinal sectional view showing a storage tank for liquid according to the first embodiment of the present invention.
Fig. 2 is a longitudinal sectional view showing an embodiment of configuration in which a transfer system for liquid is removed from the storage tank.
Fig. 3 is a longitudinal sectional view showing the transfer system attached to the storage tank according to the first embodiment.
Fig. 4(A) is a cross-sectional view taken in the direction of A-A in the transfer system shown in Fig. 3, and Fig. 4(B) is a cross-sectional view taken in the direction of B-B in the transfer system.
Figs. 5(A) (B) are operation explanatory diagrams of the transfer system attached to the storage tank.
Fig. 6(A) is a partial longitudinal view of a transfer system attached to a storage tank according to the second embodiment, Fig. 6(B) is a cross-sectional view, and Fig. 6(C) is a partially enlarged view of the cross section.
Fig. 7 is a partial longitudinal view of a transfer system attached to a storage tank according to the third embodiment.

### Description of Embodiments

### (First Embodiment)

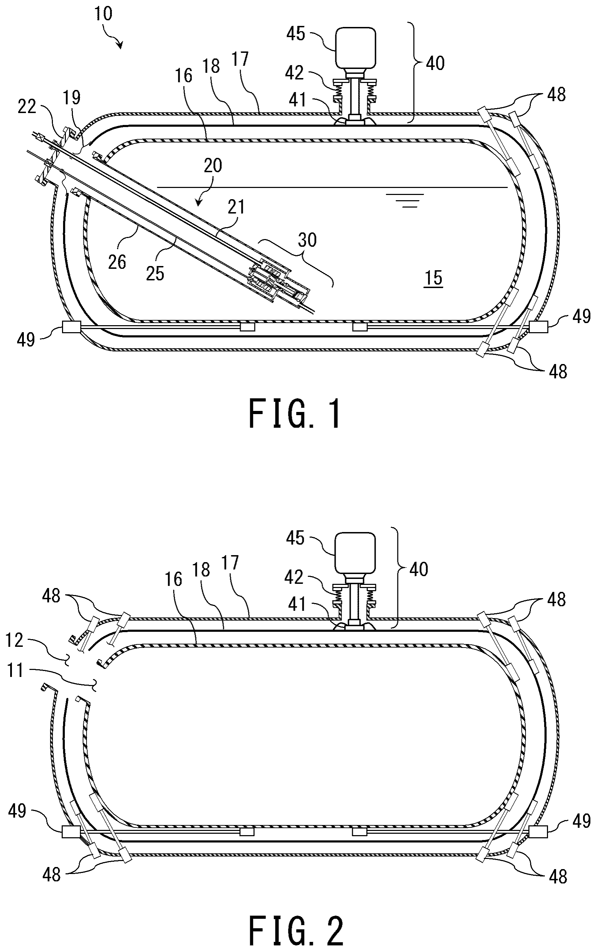

The present invention embodiment will be described below with reference to the accompanying drawings. Fig. 1 is a longitudinal view showing a storage tank 10 for liquid 15 according to the first embodiment of the present invention. Fig. 2 is a longitudinal view showing an embodiment of configuration in which a transfer system 20 for liquid 15 is removed from the storage tank 10.

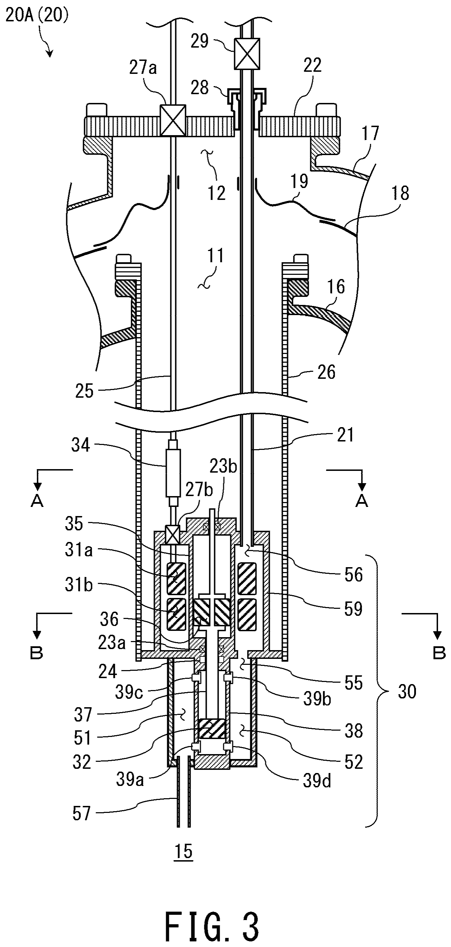

The transfer system 20 of the storage tank 10 includes a transport pipe 21 that is inserted into a first opening 11 of a reservoir 16 for liquid 15, and a pump 30 that is attached to the distal end of the transport pipe 21 inside the reservoir 16 to apply to liquid 15 a flow pressure directing to the exterior of the reservoir 16. The transfer system 20 having the above configuration prevents a driving shaft 37 of the pump 30 (see Fig. 3) from penetrating through the storage tank 10, thus suppressing heat effusion from the exterior to the interior of the storage tank 10.

The liquid 15 serving as a liquefied gas such as liquid hydrogen and LNG is heated and vaporized by a vaporizer (not illustrated) attached to the exterior of the storage tank 10 and then supplied to a combustor. Since the liquid 15 absorbs heat generated by the pump 30 in an operating condition, enthalpy of liquified gas will be increased. Such an increase of enthalpy may reduce the amount of heating in the vaporizer (not illustrated), which therefore contributes to downsizing of the vaporizer and improvement of efficiency of the entire system.

The transfer system 20 is equipped with a sleeve 26 that can be freely inserted into and extracted from the first opening 11 and that fixes the pump 30 at the distal end thereof. The sleeve 26 includes the transport pipe 21 and a cable 25 used to supply electric power to the pump 30, which are extended inside in the sleeve 26.

Since the transfer system 20 is further configured with the sleeve 26, it is possible to prevent the liquid 15 from eroding the transport pipe 21 and the cable 25. In addition, it is possible to prevent heat of the transport pipe 21, the cable 25, and the pump 30 from propagating into the interior of the reservoir 16, thus preventing the internal pressure from increasing due to vaporization of liquid 15 in the reservoir 16.

The storage tank 10 includes a vacuum vessel 17 holding the reservoir 16 therein to insulate heat, and a closing plate 22 that closes a second opening 12 of the vacuum vessel 17 and supports the transport pipe 21. In addition, the vacuum vessel 17 supports the reservoir 16 in at least two directions via vertical supports 48 and horizontal supports 49. Therefore, the reservoir 16 has sufficient strength against acceleration exerted and undergone in all directions during use, thus preventing leakage of liquid 15 due to any damage thereof.

Since the storage tank 10 is further configured with the vacuum vessel 17, it is possible to keep the reservoir 16 in a vacuum environment, and to prevent heat effusion into the liquid 15 from the exterior of the reservoir 16. In addition, it is possible to vacuumize the inside of the sleeve 26, and therefore it is possible to improve the effect of preventing heat of the transport pipe 21, the cable 25, and the pump 30 from propagating into the interior of the reservoir 16. Moreover, it is possible to enhance the effect of preventing the internal pressure of the storage tank 10 from increasing due to vaporization of liquid 15 stored in the reservoir 16.

In the storage tank 10, a thermal shield 18 made of a high heat conductor such as pure aluminum is arranged at the position outside of the reservoir 16 and inside of the vacuum vessel 17, wherein a cold head 41 of a refrigerator 40 is connected to the thermal shield 18. In addition, a main body 45 of the refrigerator 40 is fixed to the vacuum vessel 17 via an extendable joint 42 configured to absorb heat shrinkage that may occur when cooling the reservoir 16.

Since the storage tank 10 is further configured with the thermal shield 18, it is possible to block radiation heat from being released to the interior of the reservoir 16 from the vacuum vessel 17 at normal temperature and to supply cool heat, which is transmitted from the refrigerator 40, to the reservoir 16. In this connection, vertical supports 48 and horizontal supports 49 should be made of materials having low heat conductivity and high strength to prevent heat effusion from the vacuum vessel 17, for example, it is possible to adopt glass fiber reinforced plastics generally called GFRP or carbon fiber reinforced plastics.

Since the storage tank 10 has a triple-layer structure having the vacuum vessel 17, the thermal shield 18, and the reservoir 16, it is possible to limit heat input to the reservoir 16 and to maintain a large difference of temperature between the reservoir 16 and the vacuum vessel 17 at normal temperature. Therefore, it is possible to store liquid 15 as liquefied gas at low pressure in a stable manner. If liquid 15 was liquid hydrogen (boiling point: -253°C), for example, it is possible to store liquid 15 in the reservoir 16 by cooling and holding the thermal shield 18 at about -173°C (or 100K) with the refrigerator 40. On the other hand, if liquid 15 was liquefied gas such as LNG having a relatively high liquefaction temperature and having a high evaporative latent heat, it is possible to store liquid 15 in a stable manner even when the thermal shield 18 and the refrigerator 40 are excluded from the storage tank 10.

Although illustrations are omitted here, the storage tank 10 includes heat-insulating layers between the reservoir 16 and the thermal shield 18 and between the thermal shield 18 and the vacuum vessel 17. For example, heat-insulating layers are formed by laminating multiple layers using aluminum-deposited polyimide films, which can be generally used in vacuum at extremely low temperature or in space. In addition, it is possible to establish a connection between the transport pipe 21 and the thermal shield 18 as well as a connection between the transport pipe 21 and the cable 25 via a heat anchor 19. In that case, it is possible to increase the temperature of liquid 15 flowing through the transport pipe 21 and to cool the thermal shield 18 at the same time.

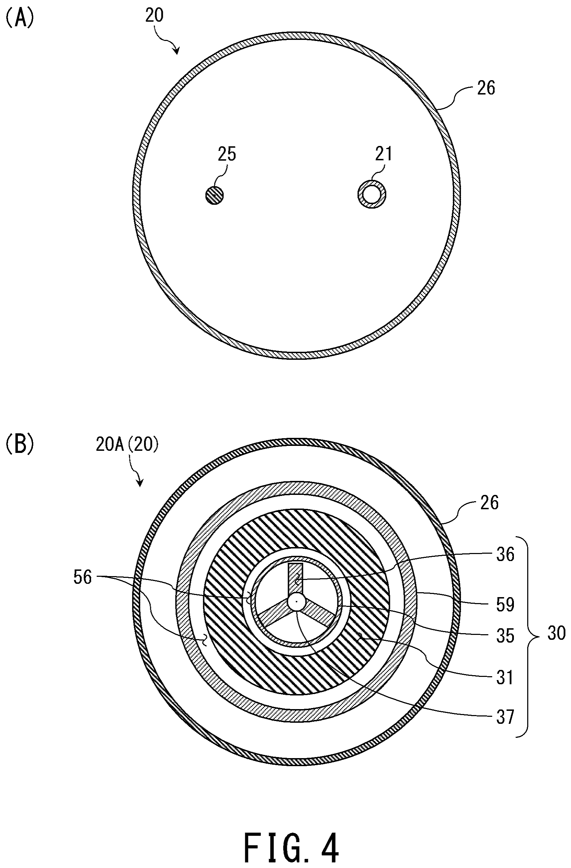

Fig. 3 is a longitudinal view showing a transfer system 20A (20) attached to the storage tank 10 according to the first embodiment. Fig. 4(A) is a cross-sectional view of the transfer system 20 taken in the direction of A-A shown in Fig. 3. Fig. 4(B) is a cross-sectional view of the transfer system 20 taken in the direction of B-B shown in Fig. 3.

The pump 30 includes a piston 32, which causes reciprocating motion under the action of excited magnets 31 (31a, 31b) to thereby generate flow pressure of liquid 15, and a flow path 56 for guiding liquid 15 to pass by the vicinity of the magnets 31 towards the distal end of the transport pipe 21.

As shown in Fig. 4(B), permanent magnets 36 are radially disposed around the driving shaft 37. Fig. 4(B) shows three permanent magnets 36; however, it is possible to provide a plurality of permanent magnets 36, the number of which is determined according to the requirement specification for a magnetic field. The permanent magnets 36 are stored in chamber 35 such that the permanent magnets 36 can be reciprocating and displaced in the vertical direction inside of chamber 35. In addition, the magnets 31 (31a, 31b) are stored in a casing 59 formed on the outer circumference of the chamber 35 concentrically in a cylindrical manner. Moreover, the casing 59 used to store magnets 31 may function as the flow path 56 for liquid 15, which is formed to communicate with the transport pipe 21 and an outlet chamber 52 described later.

The magnets 31 (31a, 31b) are excited contrarily to each other by coils, wherein the magnet 31a when excited causes the permanent magnets 36 to be displaced upwardly together with the piston 32 while the magnet 31b when excited causes the permanent magnets 36 to be displaced downwardly together with the piston 32. In this connection, the drawings show an exemplary manner of the magnets 31 and the permanent magnets 36; hence, it is possible to appropriately use the known linear drive apparatus causing displacement via reciprocation.

The piston 32 is stored inside a cylinder 38 such that the piston 32 can be displaced in a vertical direction in synchronism with the permanent magnets 36. In addition, an inlet chamber 51 and an outlet chamber 52 are formed outside of the cylinder 38. The inlet chamber 51 communicates with the interior of the reservoir 16 through a nozzle 57 and further communicates with the interior of the cylinder 38 through check valves 39a, 39c. The outlet chamber 52 communicates with the interior of the cylinder 38 through check valves 39b, 39d and further communicates with the casing 59 through a hole 55. In this way, the inlet chamber 51, the interior of the cylinder 38, and the outlet chamber 52 may collectively function as the flow path 56 for liquid 15.

The driving shaft 37 serially fixes the piston 32 and the permanent magnets 36. A major part of the driving shaft 37 is made of stainless steel and supported by bearings 23 (23a, 23b) at two spots in chamber 35. A seal 24 is arranged in the vicinity of the bearing 23a close to the piston 32 to prevent the liquid 15 retained in the interior of the cylinder 38 from leaking towards the permanent magnets 36.

The driving shaft 37 may partially include non-metal parts, each having a hollow structure or a similar structure having the same length, with lower heat conductivity than stainless steel. Therefore, it is possible to prevent heat transfer in a direction from the permanent magnets 36 to the piston 32, thus suppressing the temperature of the liquid 15 from being increased in the cylinder 38. As non-metal parts with low heat conductivity, for example, it is possible to use bars made of glass/carbon fiber reinforced plastics generally called GFRP. The GFRP has adequate mechanical strength at extremely low temperature, however, which may not match the mechanical strength of stainless steel. In addition, it is possible to decrease heat conductivity of GFRP, which is increased in strength by using a solid structure, to be lower than the heat conductivity of stainless steel having a reduced sectional area using a hollow structure.

The liquid 15 having passed by the heated magnets 31 (31a, 31b) will be increased in temperature due to sensible heat but vaporized due to latent heat. In addition, it is possible to cool the liquid 15 even when the liquid 15 is boiled in a two-phase flow state. Therefore, it is possible to maintain boil off gas (BOG) under a predetermined requirement by appropriately adjusting conditions such as the flow rate, the pressure, temperature of liquid 15, the coil resistance, the amount of heat generation, and the temperature of magnets 31.

The pump 30 is fixed to the lower end of the sleeve 26 while the upper end of the sleeve 26 is fastened to the first opening 11 of the reservoir 16. The closing plate 22 configured to close the second opening 12 of the vacuum vessel 17 is equipped with a shaft seal 28, having the function to keep the airtight condition, which allows the transport pipe 21 and a connector 27a of the cable 25 to pass therethrough. The upper end of cable 25 is connected to a connector 27a of the closing plate 22, while the lower end of cable 25 is connected to a connector 27b of the chamber 35 via a current lead 34 using a high-temperature superconducting material. Here, it is possible to significantly reduce heat effusion from the exterior of the sleeve 26 by using the current lead 34 made of an oxide-based high-temperature superconducting material (having heat conductivity of about one-hundredth of heat conductivity of copper). The cable 25 is connected in a deflected manner to prevent tensile force from exerting thereon due to heat shrinkage.

The upper end of the transport pipe 21 is connected to a joint 29 of an external pipe, while the lower end of the transport pipe 21 is connected to the flow path 56 of the chamber 35. Since the heat anchor 19 is connected to the thermal shield 18, it is possible to suppress heat input to the pump 30 from the closing plate 22 via the transport pipe 21 and the cable 25. The present embodiment exemplifies the pump 30 as a double-action reciprocating pump operating by a linear drive system; however, it is possible to use other known techniques such as a single-action reciprocating pump and a rotary pump.

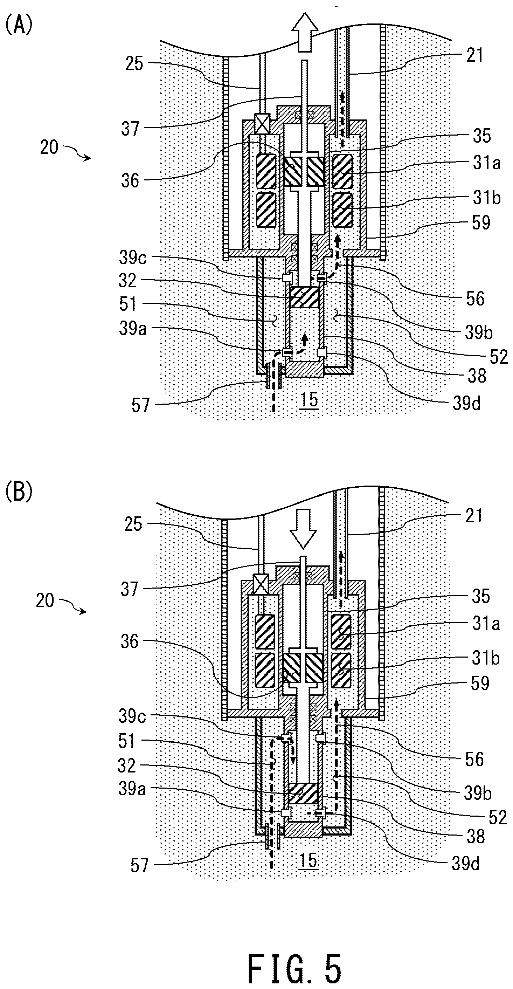

Figs. 5(A) (B) are operation explanatory diagrams of the transfer system 20. As shown in Fig. 5(A), an ascending motion of the piston 32 causes the inlet check valve 39a to open such that the liquid 15 flows into the inside of the cylinder 37 on its lower side from the inlet chamber 51. At the same time, the liquid 15 inside of the cylinder 38 on its upper side is compressed by the piston 32 to open the outlet check valve 39b such that the liquid 15 flows into the outlet chamber 52 and further flows into the inside of the casing 59. At this time, the inlet check valve 39c and the outlet check valve 39d are in closed states.

Next, as shown in Fig. 5(B), a descending motion of the piston 32 causes the inlet check valve 39c to open such that the liquid 15 flows into the inside of the cylinder 38 on its upper side from the inlet chamber 51. At the same time, the liquid 15 inside of the cylinder 38 on its lower side is compressed by the piston 32 to open the outlet check valve 39 such that the liquid 15 flows into the outlet chamber 52 and further flows into the inside of the casing 59. At this time, the inlet check valve 39a and the outlet check valve 39b are in closed states.

The liquid 15 having flown into the inside of the casing 59 passes through the flow paths 56, which are formed in an inner diameter side and an outer diameter side of the magnets 31, and flows into the transport pipe 21 connected to the casing 59. The liquid 15 flowing through the transport pipe 21 passes through the closing plate 22 (Fig. 3) and is supplied to another device outside the tank 10. At this time, the magnets 31 using normal conducting coils, which are made of generally known wire materials whose main components are copper or aluminum, may generate heat due to energy loss of electric resistance of coil wirings (i.e., copper loss), energy loss due to magnetic fields and changes in magnetic fields (i.e., iron loss), and energy loss due to frictions and air resistance in the magnets 31 (i.e., machine loss). The liquid 15 flowing through the casing 59 may remove heat of coils of the magnets 31, which are heated by convective heat transfer. The warm liquid 15 is led to the transport pipe 21 and brought outside of the tank 10.

### (Second Embodiment)

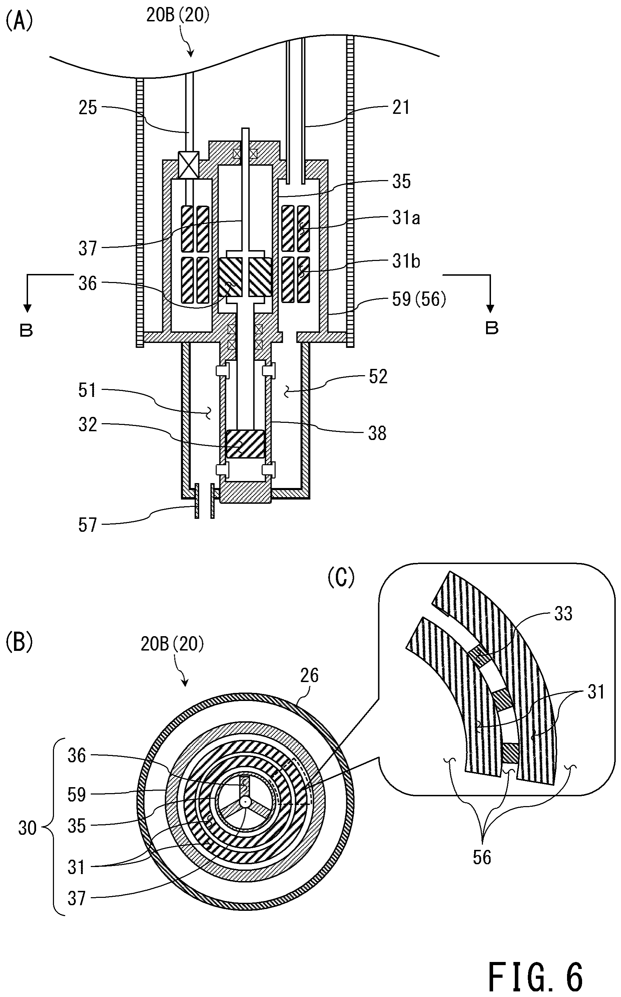

Next, the second embodiment of the present invention will be described with reference to Fig. 6. Fig. 6(A) is a partial longitudinal view of a transfer system 20B (20) according to the second embodiment. Fig. 6(B) is a cross-sectional view of the transfer system 20B (20). Fig. 6(C) is a partially enlarged view of the cross section. Compared with the foregoing configuration of the first embodiment, the second embodiment has a different configuration described as follows. Specifically, the magnets 31 have a coaxial multiple (or double) cylindrical structure with respect to the reciprocating motion of the piston 32, wherein a gap of the cylindrical structure functions as the flow path 56. In Fig. 6, parts having similar configurations or functions of Fig. 3 are denoted by the same reference symbols; hence, duplicate descriptions are omitted here.

As shown in Fig. 6(C), the transfer system 20B according to the second embodiment includes a further flow path 56 around part of the magnets 31 in the thickness direction. The present embodiment shows an exemplary configuration in which a single flow path 56 lies between coils; however, it is possible to form multiple flow paths 56 laid between coils. A plurality of spacers 33 is arranged along the flow path 56 between coils. A plurality of spacers 33 made of GFRP having insulating property is arranged such that the flow path 56 is formed in a winding direction of coils along a circumferential direction.

Due to the above configuration of the flow path(s) 56, it is possible to efficiently cool coils even when the magnets 31 generate a large amount of heat. In particular, the magnets 31 using superconducting coils cannot sustain the superconducting condition when the inside temperature of coils becomes higher than the critical temperature; hence, the above cooling may work effectively.

### (Third Embodiment)

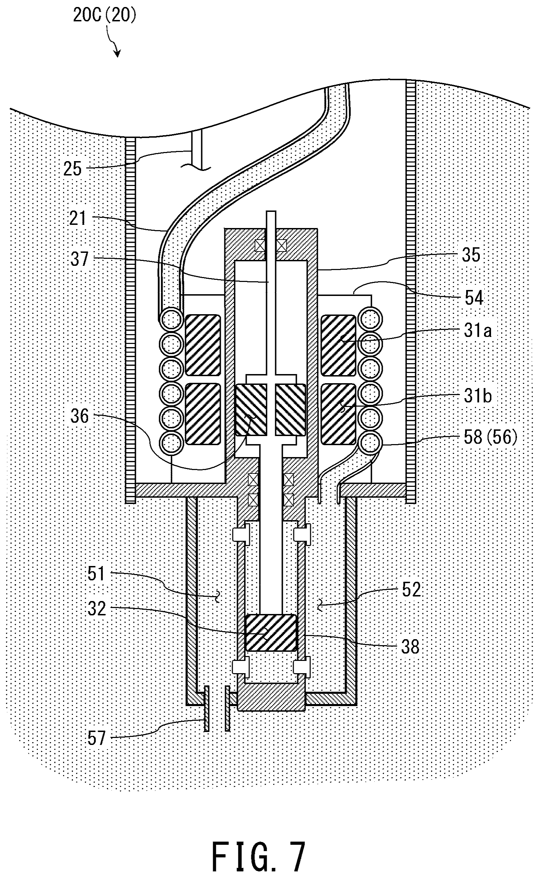

Next, the third embodiment of the present invention will be described with reference to Fig. 7. Fig. 7 is a partial longitudinal view of a transfer system 20C (20) according to the third embodiment. Compared with the above configuration of the first embodiment, the third embodiment has a different configuration described as follows. That is, the flow path 56 is formed in a spiral manner on the outer circumference of magnets 31. In Fig. 7, parts having similar configurations or functions of Fig. 1 are denoted by the same reference symbols; hence, duplicate descriptions are omitted here.

As shown in Fig. 7, in the transfer system 20C according to the third embodiment, a heat transmission pipe 58 is set up in a spiral manner around magnets 31 via a heatsink 54. The piston 32 pushes the liquid 15 to flow into the heat transmission pipe 58 connected to the outlet chamber 52, wherein the liquid 15 cools the magnets 31 via heat exchange, passes through the transport pipe 21, and is supplied to another device outside of the tank. As materials for the heat transmission pipe 58 and the heatsink 54, it is preferable to use highly heat conductive materials such as an aluminum alloy and a copper alloy. The above cooling mechanism may prevent coils of magnets 31 from wetting by the liquid 15, thus reducing the risk of electrical short circuits with a simple structure.

### (Fourth Embodiment)

Next, the fourth embodiment of the present invention will be described with reference to Fig. 3, Fig. 6, and Fig. 7. Compared with the above configurations according to the first embodiment through the third embodiment, the fourth embodiment has a different configuration characterized in that the magnets 31 are superconducting magnets. Due to different boiling points of temperature according to different types of liquid 15, the maximum current (or critical current), which wiring rods of coils allow to flow through in the superconducting state, may vary according to temperature. Therefore, an appropriate type of wiring rods of coils may be varied according to the type of liquid 15.

In a temperature range under 20K, for example, it is possible to use low-temperature superconducting wiring rods based on metals such as magnesium diboride (MgB₂) and niobium titanium (NbTi). In the temperature range above 20K, copper-oxide high temperature superconducting wiring rods called REBCO are used generally. Superconducting magnets can increase the current density ten times or higher than the current density of normal conducting magnets; hence, it is possible to reduce the volume of the magnets 31 to one tenth or less. Therefore, it is possible to reduce the size and the weight of magnets 31 attached to the pump 30 installed in the small-size reservoir 16, and therefore it is possible to operate the pump 30 without copper loss since the electric resistance becomes zero in the superconducting state.

According to the storage tank for liquid as described in at least one of the foregoing embodiments, the pump for applying the flow pressure to liquid is attached to the distal end of the transport pipe inside of the reservoir, and therefore it is possible to reduce the number of penetrating components, to reduce heat input to the tank, and to reduce the vaporization loss of liquid. Therefore, it is possible to provide a tank having a high space-saving property and suitable for storage of a liquid at an extremely low temperature.

Various embodiments of the present invention have been described above, wherein the embodiments are illustrative and do not intend to limit the scope of the invention. The embodiments can be implemented in various modes, and therefore various omissions, replacements, modifications, and combinations can be made without departing from the spirit of the invention. The embodiments and modifications are therefore included in the scope and the spirit of the invention and covered by the invention described in claims and the scope of equivalents thereof.

## Claims

1. A storage tank for liquid, comprising:
a transport pipe configured to be inserted into a first opening formed at a reservoir for liquid; and
a pump, which is disposed at a distal end of the transport pipe inside of the reservoir, configured to apply a flow pressure to the liquid to flow toward an outside of the reservoir.

2. The storage tank for liquid according to claim 1, wherein the pump includes
a piston configured to generate the flow pressure via a reciprocating motion under an action of magnets when excited, and
a flow path configured to guide the liquid to pass by a vicinity of the magnets toward the transport pipe.

3. The storage tank for liquid according to claim 2, wherein the magnets have a coaxial multiple cylindrical structure with respect to the reciprocating motion of the piston, and wherein a gap of the cylindrical structure functions as the flow path.

4. The storage tank for liquid according to claim 2, wherein the flow path is formed in a spiral manner on an outer circumference of the magnets.

5. The storage tank for liquid according to claim 2, wherein the liquid is liquefied gas, and wherein the magnets are configured with superconducting magnets.

6. The storage tank for liquid according to any one of claims 1 to 5, further comprising a sleeve configured to be inserted into or removed from the first opening of the reservoir, configured with a cable for supplying electric power to drive the pump and the transport pipe, which runs through an inside of the sleeve, and configured to fix the pump at a distal end thereof.

7. The storage tank for liquid according to claim 6, further comprising:
a vacuum vessel configured to hold and insulate the reservoir therein; and
a closing plate configured to close a second opening formed at the vacuum vessel and to support the transport pipe.

8. The storage tank for liquid according to claim 7, further comprising a thermal shield that is connected to a refrigerator and disposed outside of the reservoir and inside of the vacuum vessel.
